# EUROPEAN PATENT APPLICATION

(11) **EP 4 721 602 A1**
(43) Date of publication of application: **08.04.2026**
(21) Application number: 24814235.8
(22) Date of filing: 20.05.2024
(51) Int. Cl.: A24F 40/46, A24F 40/48, A24F 40/10, C04B 38/08

(54) **ATOMIZATION CORE, ATOMIZER AND ELECTRONIC ATOMIZATION DEVICE**

(30) Priority: 01.06.2023 CN 202310645427
(71) Applicant: Smoore International Holdings Limited, Grand Cayman, KY1-1111 (KY)
(72) Inventor: WANG, Jianguo, Shenzhen, Guangdong 518102 (CN); NAN, Bo, Shenzhen, Guangdong 518102 (CN); XIAO, Lingrong, Shenzhen, Guangdong 518102 (CN)
(74) Representative: Winter, Brandl - Partnerschaft mbB
(86) International application number: PCT/CN2024/094271
(87) International publication number: WO 2024/245036

(57) **Abstract**

This application relates to the field of electronic atomization technologies, and in particular, to an atomization core, an atomizer, and an electronic atomization device. This application provides an atomization core. The atomization core includes a porous substrate and a heating element. The porous substrate is a porous glass-ceramic substrate. The porous glass-ceramic substrate includes a plurality of glass-ceramic bubbles. Adjacent glass-ceramic bubbles are directly bonded to each other through sintering. At least some of the glass-ceramic bubbles have openings. Cavities in the glass-ceramic bubbles having the openings are in communication with each other through the openings to form pores, and the pores extend through the porous glass-ceramic substrate and reach a surface of the porous glass-ceramic substrate. In this application, the porous substrate and the atomization core manufactured by the glass bubbles have a controllable pore structure and high atomization efficiency.

## Description

### CROSS-REFERENCE TO RELATED APPLICATIONS

This application claims priority to Chinese Patent Application No. 202310645427.6, filed with the China National Intellectual Property Administration on June 1, 2023 and entitled "ATOMIZATION CORE, ATOMIZER, AND ELECTRONIC ATOMIZATION DEVICE", which is incorporated herein by reference in its entirety.

### TECHNICAL FIELD

This application relates to the field of electronic atomization technologies, and in particular, to an atomization core, an atomizer, and an electronic atomization device.

### BACKGROUND

An e-cigarette is a good substitute to a conventional cigarette. A common e-liquid e-cigarette is generally composed of three parts: a cigarette rod, an atomization core, and an atomization chamber. A battery is arranged in the cigarette rod, and the atomization core is set in the e-liquid chamber. The atomization core is the heart of an entire e-cigarette, e-liquid is atomized into smoke through the atomization core, and the atomized gas is discharged to a mouthpiece. Compared with the conventional cigarette, the e-cigarette has advantages of reducing harmful substances such as tar and CO in the smoke, ultimately achieving an objective of replacing smoking or alleviating addiction, and reducing absorption of the harmful substances. Currently, a manner in which a commercial e-cigarette is atomized is mainly resistance heat-based atomization, and the e-liquid is atomized through the heating of the atomization core. An existing atomization core usually includes a porous substrate and a heating element. The porous substrate is usually made of a material with a porous structure, such as a cotton core and a porous ceramic, to achieve a function of guiding an atomization medium toward the heating element.

However, a ceramic material is usually manufactured by using, for example, diatomite, and a porous substrate manufactured by using the ceramic material has problems such as an uncontrollable pore structure and low atomization efficiency.

### SUMMARY

An objective of this application is to overcome a problem of low atomization efficiency in the prior art, thereby providing an atomization core, an atomizer, and an electronic atomization device.

To achieve the foregoing objective, the following technical solutions are used in this application.

This application provides an atomization core. The atomization core includes a porous substrate and a heating element.

The porous substrate is a porous glass-ceramic substrate, and the porous glass-ceramic substrate includes a plurality of glass-ceramic bubbles.

Adjacent glass-ceramic bubbles are directly bonded to each other through sintering.

At least some of the glass-ceramic bubbles have openings.

Cavities in the glass-ceramic bubbles having the openings are in communication with each other through the openings to form pores, and the pores extend through the porous glass-ceramic substrate and reach a surface of the porous glass-ceramic substrate.

Optionally, a coefficient of thermal expansion of the porous glass-ceramic substrate ranges from 10×10⁻⁶/°C to 21 × 10⁻⁶/°C.

Optionally, crystallinity of the glass-ceramic bubbles ranges from 45% to 95%.

Optionally, an opening rate of the glass-ceramic bubbles in the porous glass-ceramic substrate is greater than 80%.

Optionally, a porosity of the porous glass-ceramic substrate ranges from 50% to 90%.

Optionally, the porosity of the porous glass-ceramic substrate ranges from 60% to 80%.

Optionally, the porous glass-ceramic substrate further includes pores formed by a pore-forming agent.

Optionally, in the porous glass-ceramic substrate, a pore volume formed by the glass-ceramic bubbles having openings accounts for more than 70% of a total pore volume of the porous glass-ceramic substrate.

Optionally, an average pore size in the porous glass-ceramic substrate ranges from 10 µm to 60 µm.

Optionally, the heating element is selected from at least one of a metal heating wire, a metal heating mesh, or a metal heating film.

The heating element is arranged on at least one surface of the porous glass-ceramic substrate; and
optionally, the metal heating film is selected from at least one of stainless steel or a nickel-containing alloy.

This application provides an atomizer. The atomizer includes the foregoing atomization core.

This application provides an electronic atomization device. The electronic atomization device includes the foregoing atomizer, and further includes a battery assembly.

Beneficial effects of this application are as follows.

This application provides an atomization core. The atomization core includes a porous substrate and a heating element. The porous substrate is a porous glass-ceramic substrate. The porous glass-ceramic substrate includes a plurality of glass-ceramic bubbles. Adjacent glass-ceramic bubbles are directly bonded to each other through sintering. At least some of the glass-ceramic bubbles have openings. Cavities in the glass-ceramic bubbles having the openings are in communication with each other through the openings to form pores, and the pores extend through the porous glass-ceramic substrate and reach a surface of the porous glass-ceramic substrate. In this application, the porous substrate having a specific structure and the atomization core are formed through the glass-ceramic bubbles, which have a controllable pore structure and high atomization efficiency.

### BRIEF DESCRIPTION OF THE DRAWINGS

To describe technical solutions in specific implementations of this application or in the related art more clearly, the accompanying drawings required for describing the specific implementations or the related art are briefly described below. Apparently, the accompanying drawings in the following description show some implementations of this application, and a person of ordinary skill in the art may still derive other drawings from these accompanying drawings without creative efforts.
FIG. 1 is a physical diagram of an atomization core according to Embodiment 1 of this application.
FIG. 2 is a scanning electron micrography (SEM) diagram of a surface of a porous ceramic substrate of an atomization core according to Embodiment 1 of this application.
FIG. 3 is an SEM diagram of a cross-section of a porous ceramic substrate of an atomization core according to Embodiment 1 of this application.
FIG. 4 is a distribution diagram of a temperature field of an atomization core according to Embodiment 1 of this application.
FIG. 5 is a statistical chart of a temperature zone area of an atomization core according to Embodiment 1 of this application.
FIG. 6 is a schematic diagram of a soot situation of an atomization core according to Embodiment 1 of this application.
FIG. 7 is a schematic diagram of an atomizer according to this application.
FIG. 8 is a schematic diagram of an electronic atomization device according to this application.

Reference numerals: 1-Atomizer and 2-Battery assembly.

### DETAILED DESCRIPTION

The following embodiments are provided to better understand this application and are not intended limit an optimum implementation, and do not constitute a limitation to the content and the scope of protection of this application. Any product identical or similar to this application obtained by anyone under the inspiration of this application or by combining this application with the features of other prior art shall fall within the scope of protection of this application.

If no specific experimental steps or conditions are specified in the embodiments, the experiments can be carried out according to the conventional experimental steps or conditions described in the literature in the art. Reagents or instruments used without indicating the manufacturer are all conventional reagent products that can be purchased commercially.

An atomization manner of a commercial e-cigarette is mainly resistance heat-based atomization, and the e-liquid is atomized through the heating of the atomization core. An existing atomization core usually includes a porous substrate and a heating element. The porous substrate is usually made of a material with a porous structure, such as a cotton core and a porous ceramic, to achieve a function of guiding an atomization medium toward the heating element.

However, a ceramic material is usually manufactured by using, for example, diatomite, and a porous substrate manufactured by using the ceramic material has an uncontrollable pore structure and low atomization efficiency.

Therefore, this application provides an atomization core. The atomization core includes a porous substrate and a heating element. The porous substrate is a porous glass-ceramic substrate. The porous glass-ceramic substrate includes a plurality of glass-ceramic bubbles. Adjacent glass-ceramic bubbles are directly bonded to each other through sintering. At least some of the glass-ceramic bubbles have openings. Cavities in the glass-ceramic bubbles having the openings are in communication with each other through the openings to form pores, and the pores extend through the porous glass-ceramic substrate and reach a surface of the porous glass-ceramic substrate. The inventor found that the porous glass-ceramic substrate having a specific structure formed by the glass-ceramic bubbles have a controllable pore structure, good atomization efficiency, and is not easy to produce soot, does not affect the taste, and can improve a service life.

In some optional implementations, a coefficient of thermal expansion of the porous glass-ceramic substrate ranges from 10×10⁻⁶/°C to 21×10⁻⁶/°C. For example, optionally, the coefficient of thermal expansion of the porous glass-ceramic substrate is 10×10⁻⁶/°C, 11×10⁻⁶/°C, 12×10⁻⁶/°C, 13×10⁻⁶/°C, 14×10⁻⁶/°C, 15×10⁻⁶/°C, 16×10⁻⁶/°C, 17×10⁻⁶/°C, 18×10⁻⁶/°C, 19×10⁻⁶/°C, 20×10⁻⁶/°C, or 21×10⁻⁶/°C. The inventor found that the porous glass-ceramic substrate with the coefficient of thermal expansion of 10×10⁻⁶-21×10⁻⁶/°C can cooperate well with the heating element to avoid excessive differences between the porous glass-ceramic substrate and the heating element, thereby affecting the service life. In addition, the coefficient of thermal expansion changes little with a temperature, which is conducive to stability of a pore structure at different temperatures, facilitating stable liquid supply, providing a stable and consistent atomization amount, and ensuring consistency of the taste. In addition, failure situations such as cracking under thermal shock are avoided, thereby improving the service life of the atomization core.

A raw material used in this application includes glass bubbles having a cavity structure, also referred to as a hollow glass "microsphere", which may be obtained commercially. In a manufacturing process of this application, the glass bubbles of the raw material are sintered to form glass-ceramic bubbles with an opening of a certain degree of crystallinity. In some optional implementations, the crystallinity of the glass-ceramic bubbles ranges from 45% to 95%. For example, optionally, the crystallinity of the glass-ceramic bubbles is 45%, 47%, 51%, 53%, 55%, 58%, 60%, 61%, 63%, 64%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, or 95%. Optionally, the glass bubbles of the raw material may also have a certain degree of crystallinity. In other words, the glass bubbles of the raw material may be glass or glass-ceramic.

In some optional implementations, an opening rate of the glass-ceramic bubbles in the porous glass-ceramic substrate is greater than 80%. The opening rate refers to a proportion of a pore volume that is in communication with each other and that can be used for liquid guiding to a total pore volume of the porous glass-ceramic substrate. In this application, the pore structure is mainly derived from a cavity structure of a single glass bubble. Therefore, in some embodiments of this application, the opening rate may be understood as a proportion of a quantity of the glass-ceramic bubbles having openings after being formed through sintering to a total quantity of the glass bubbles before sintering. For example, optionally, the opening rate of the glass-ceramic bubbles in the porous glass-ceramic substrate is 80.1%, 81%, 82%, 83%, 84%, 85%, 86%, 87%, 89%, 90%, 91%, 92%, 93%, 94%, 95%, 96%, or 97%. The inventor considers through analysis that a higher opening rate facilitates formation of a pore structure that is in communication with each other, and can achieve better liquid storage and liquid guiding for a liquid atomization medium.

In some optional implementations, a porosity of the porous glass-ceramic substrate ranges from 50% to 90%, for example, optionally, the porosity of the porous glass-ceramic substrate is 50%, 51%, 52%, 53%, 55%, 58%, 59%, 60%, 61%, 63%, 65%, 67%, 68%, 69%, 70%, 71%, 73%, 75%, 77%, 79%, 80%, 81%, 83%, 85%, 88%, or 90%. Optionally, the porosity of the porous glass-ceramic substrate ranges from 60% to 80%. In some implementations, the pores of the porous glass-ceramic substrate are entirely formed by the glass-ceramic bubbles having openings. In some other implementations, the pores of the porous glass-ceramic substrate include pores formed by the glass-ceramic bubbles having openings, and further include pores formed by a pore-forming agent. Further, in the porous glass-ceramic substrate, a pore volume formed by the glass-ceramic bubbles having openings accounts for more than 70% of a total pore volume of the porous glass-ceramic substrate. For example, optionally, the pore volume formed by the glass-ceramic bubbles having openings accounts for 70.1%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, and 100% of the total pore volume of the porous glass-ceramic substrate.

It should be noted that, on one hand, a magnitude of the porosity of the porous glass-ceramic substrate may be controlled and adjusted by selecting the glass bubbles of the raw material; on the other hand, the magnitude of the porosity of the porous glass-ceramic substrate may also be adjusted in a manner of properly adding a specific proportion of the pore-forming agent in the preparation process. It may be understood that for a single glass bubble, a proportion of a volume of an internal cavity thereof to an overall volume of the single glass bubble determines a density thereof. Therefore, a glass bubble monomer of a specific density can be screened out by liquid having a suitable density. The glass bubbles having the specific density can correspondingly manufacture a porous glass-ceramic substrate having a corresponding porosity. It may be understood that the density of the single glass bubble is excessively small. In other words, a smaller wall thickness thereof leads to a reduced strength of the single glass bubble. Therefore, in a case that a strength requirement thereof is ensured, the porosity cannot be increased by simply increasing a proportion of a cavity thereof. Therefore, the inventor can further increase the porosity thereof by adding the pore-forming agent in a case that the overall strength of the glass bubbles and the porous glass-ceramic substrate after molding are ensured.

In some optional implementations, a pore size of pores in the porous glass-ceramic substrate ranges from 10 µm to 60 µm. For example, optionally, the pore size of the pores in the porous glass-ceramic substrate is 10 µm, 13 µm, 15 µm, 19 µm, 20 µm, 25 µm, 27 µm, 30 µm, 35 µm, 36 µm, 40 µm, 43 µm, 48 µm, 50 µm, 52 µm, 58 µm, or 60 µm. The pore size has a medium range, which has effects of liquid guiding and liquid locking. It should be noted that the pore size of the porous glass-ceramic substrate may also be controlled and adjusted by selecting the glass bubbles of the raw material, and the glass bubbles of the raw material having a required particle size may be obtained through suitable screening. With reference to the foregoing proper volume proportion of the cavity, pore sizes of cavities of required glass bubbles of the raw material can be correspondingly obtained. Through the suitable glass bubbles of the raw material and the manufacturing process, the pore structure of the porous glass-ceramic substrate can be controlled.

A specific form and material of the heating element are not specifically limited in this application. For example, the heating element may be selected from at least one of a metal heating wire, a metal heating mesh, or a metal heating film. In an optional implementation, the heating element is arranged on at least one surface of the porous glass-ceramic substrate. Further, the metal heating film is selected from at least one of stainless steel or a nickel-containing alloy. In an optional implementation, the heating element is the metal heating film.

In some optional implementations, a manner in which the heating element is arranged on the at least one surface of the porous glass-ceramic substrate includes at least one of printing, soldering, volatilizing, or depositing. For example, optionally, a heating element paste is printed on a substrate, and is formed through sintering at a preset temperature. Optionally, the heating element or a heating mesh is soldered to the substrate. Optionally, the heating element is evaporated/deposited on the substrate through physical vapor deposition (PVD) or chemical vapor deposition (CVD).

In some optional implementations, the method further includes: applying the electrode paste to at least an end of a heating element, and forming through sintering.

This application is further described below in combination with the manufacturing method.

In some optional implementations, the manufacturing method of the atomization core includes the following steps.
1) Mix the glass bubbles of the raw material with a binder, a slipping agent, and water, and perform pressing and forming to obtain a green body.
2) Perform a first sintering, a second sintering, and a third sintering on the green body in step 1), to obtain the porous glass-ceramic substrate.
3) Manufacture a raw material of the heating element on the porous glass-ceramic substrate in step 2), and form through sintering.

In some optional implementations, in step (1), the binder may be an organic binder. Specifically, the binder is selected from at least one of methylcellulose, hydroxyethyl cellulose, or hydroxypropyl methylcellulose. The slipping agent may be a slipping agent of an aliphatic hydrocarbon, for example, a paraffin, or a metal stearate. Specifically, the slipping agent is sodium stearate.

In some optional implementations, a pressure for pressing and forming in step 1) ranges from 1 bar to 30 bar. Most of the glass bubbles do not fragment during the pressing and forming process, and a complete spherical shape of the single glass bubble is maintained. Therefore, the pressure for pressing and forming may be properly adjusted based on a compressive strength of the selected glass bubble.

In some optional implementations, in step 2), a first temperature of the first sintering is at least 200°C, for example, 300°C to 400°C, and/or a first residence time is at least 1 minute, for example, 1 hour to 10 hours. During the sintering process at the temperature, a substance such as a solvent and a binder is removed from the green body.

In some optional implementations, a second temperature of the second sintering is greater than 400°C and less than a softening point of glass of the glass bubble. for example, 500°C, 600°C, or 700°C, and a second residence time thereof is at least 1 minute, for example, 1 hour to 10 hours. The purpose of the second temperature is greater than 400°C and less than the softening point of the glass of the glass bubbles is to keep an original form of the green body unchanged. In addition, because the temperature has already exceeded 400°C, a glass composition in the glass bubbles starts to change. A disordered glass phase partially crystallizes to a crystal phase within the temperature range, and the glass bubbles convert into the glass-ceramic bubbles or a proportion of the crystal phase in the glass bubbles starts to increase. In addition, due to the conversion, some of the glass bubbles begin to crack and have at least one opening. Therefore, the sintering time within the temperature range may be properly adjusted to regulate the crystallinity of the porous glass-ceramic. It may be understood that the glass bubbles of the raw material may also include a certain proportion of the crystal phase, which may shorten the sintering time in this process.

In some optional implementations, a third temperature of the third sintering is greater than the softening point of the glass. Specifically, a temperature of the softening point of the glass is less than 900°C. A third residence time may be at least 1 minute, for example, 1 hour to 10 hours. At this temperature, the glass composition has flowability. Therefore, adjacent glass-ceramic bubbles are directly adhered to each other, and the glass-ceramic bubbles are adhered to form a porous glass-ceramic substrate of an integral structure. In addition, because the glass-ceramic bubbles still have a crystal phase composition, the crystal phase composition, as a framework, causes the form of the glass-ceramic bubbles to not collapse, and still maintains a basic complete form. In addition, the glass-ceramic bubbles are further cracked to form a large quantity of openings. The openings are in communication with each other to form pores. The pores extend through the porous glass-ceramic substrate and reach a surface of the porous glass-ceramic substrate.

The third temperature is greater than the softening point of the glass of the glass bubble. The glass-ceramic bubbles are heated at least to a softening temperature of an amorphous glass, so that most of the glass-ceramic bubbles open due to expansion of air in the bubble. In addition, the heating causes the adjacent glass-ceramic bubbles to sinter together and form a bond. Overall, the bonded open glass-ceramic bubbles form the pores of the porous glass-ceramic substrate. The glass-ceramic bubbles are applied to an atomizer and an electronic atomization device, so as to effectively improve atomization efficiency and a liquid guiding effect.

In some optional implementations, a mass ratio of the glass bubbles to the binder, the slipping agent, and the water is (100-200) : (10-50) : (1-10) : (45-150).

In some optional implementations, in step 3), the raw material of the heating element may be at least one of the electronic paste (metal paste), the heating wire, or the heating mesh. The electronic paste may be directly applied to the surface of the porous glass-ceramic substrate through screen printing based on a preset contour, and then is formed through sintering at the preset temperature. The sintering temperature may be adaptively adjusted based on types of a bonding phase and a metal composition in the electronic paste. Generally, the sintering temperature ranges from 400°C to 800°C.

In some optional implementations, the glass composition of the glass bubbles may be soda-lime silicate glass, borosilicate glass, or another glass. Specifically, the glass composition may include: 74-85% of SiO₂, 6.5-10% of CaO, 5-9% of B₂O₃, 0.4-2% of Al₂O₃, 0.01-1% of Fe₂O₃, 1-3% of Na₂O, and 0.1-0.5% of K₂O.

In some optional embodiments, in step 1), the pore-forming agent is further added. Optionally, the pore-forming agent is selected from at least one of starch, polymethyl methacrylate (PMMA), polystyrene (PS), or graphite. Optionally, a particle size of the pore-forming agent may range from 1 µm to 150 µm. It may be understood that the addition of the pore-forming agent may further increase the porosity of the porous glass-ceramic substrate in a case that the strength of the glass bubbles of the raw material is ensured.

In some optional implementations, in step 1), a second inorganic material is further included. The second inorganic material may be at least one of clay, talc, silica, or alumina. Melting points or softening points of the foregoing materials are greater than the softening point of the glass in the glass bubble.

In some optional implementations, a mass ratio of the glass bubbles to the binder, the slipping agent, the water, the pore-forming agent, and the second inorganic material is (100-200) : (10-50) : (1-10) : (45-150) : (0-70) : (0-9).

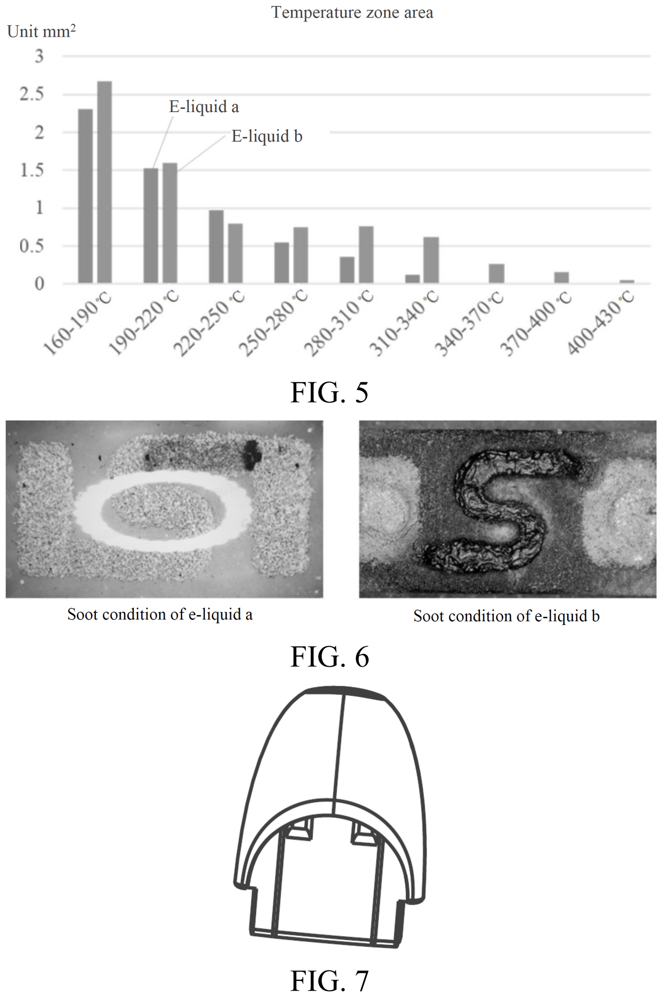

As shown in FIG. 7, this application further provides an atomizer. The atomizer includes the foregoing atomization core. The atomizer includes a shell. A liquid storage tank and an atomization cavity are formed in the shell. The liquid storage tank is configured to store a liquid atomization medium, and the atomization cavity is configured to accommodate the foregoing atomization core. The atomization core may atomize the liquid atomization medium.

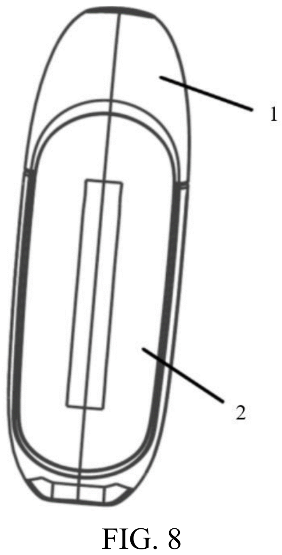

As shown in FIG. 8, this application further provides an electronic atomization device. The electronic atomization device includes the foregoing atomizer 1, and further includes a battery assembly 2. The battery assembly and the atomizer may be of an integrated structure or a detachable structure. The battery assembly is configured to supply power to the atomizer based on a preset mode, so that the atomizer atomizes the liquid atomization medium based on the preset mode.

This application is further described in detail below with reference to specific embodiments. These embodiments cannot be understood as limiting the protection scope of this application.

The following embodiments of this application all use glass bubbles of the raw material having a same composition. The glass bubbles of the raw material are sodium-calcium silicate glass, and parameters of the particle size of the raw material are as follows: D10=18.61 µm, D50=39.38 µm, and D90=69.47 µm. The porosity within the glass bubble monomer is 84.8%. Main compositions of the glass bubbles of the raw material are: Si: 41.647 wt%, O: 49.375 wt%, Na: 3.778 wt%, Ca: 4.619 wt%, Mg: 0.201 wt%, and Al: 0.379 wt%.

### Embodiment 1

This embodiment provides an atomization core. A manufacturing method thereof includes the following steps.
1) Mix 100 g of glass bubbles with 25 g of hydroxyethyl cellulose, 2.5 g of sodium stearate, and 48 g of water, and perform pressing and forming to obtain a green body, where a forming pressure is 23 bar.
2) Perform a first sintering, a second sintering, and a third sintering on the green body in step 1), to obtain a porous glass-ceramic substrate, where a first sintering temperature is 220°C, a first sintering time is 2 hours, a second sintering temperature is 600°C, a second sintering time is 2 hours, a third sintering temperature is 1200°C, and a third sintering time is 1 hour, and finally, obtain the porous glass-ceramic substrate with natural cooling in a furnace.
3) Print a heating element paste on the porous glass-ceramic substrate in step 2) and form through sintering, a sintering temperature being 600°C and a sintering time being 1 hour, to obtain the atomization core. The heating element paste is stainless steel.

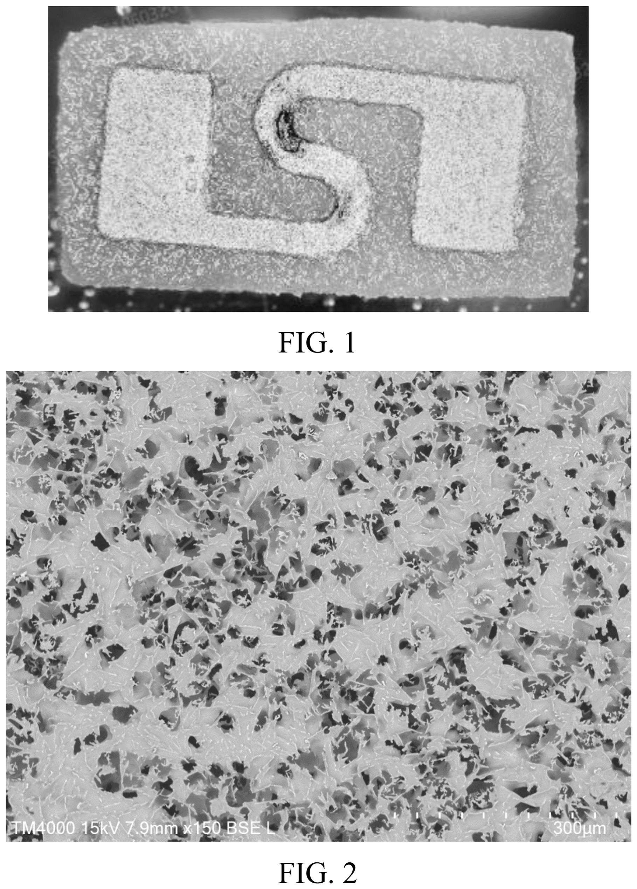

As shown in FIG. 1, the porous substrate of the atomization core manufactured in this embodiment is a porous glass-ceramic substrate, and the porous glass-ceramic substrate includes a plurality of glass-ceramics bubbles. Adjacent glass-ceramic bubbles are directly bonded to each other through sintering. Some of the glass-ceramic bubbles have openings. Cavities in the glass-ceramic bubbles having the openings are in communication with each other through the openings to form pores, and the pores extend through the porous glass-ceramic substrate and reach a surface of the porous glass-ceramic substrate.

### Embodiment 2

This embodiment provides an atomization core. A manufacturing method thereof includes the following steps.
1) Mix 100 g of glass bubbles with 25 g of hydroxyethyl cellulose, 2.5 g of sodium stearate, 25 g of a pore-forming agent, 67 g of water, and perform pressing and forming to obtain a green body, where a forming pressure is 12 bar, the pore-forming agent is polystyrene with an average particle size of 50 µm.

Step 2) and step 3) are the same as those in Embodiment 1.

### Embodiment 3

This embodiment provides an atomization core. A manufacturing method thereof includes the following steps.
1) Mix 100 g of glass bubbles are mixed with 25 g of hydroxyethyl cellulose, 2.5 g of sodium stearate, 4 g of a second inorganic material, 50 g of a pore-forming agent, and 75 g of water, and perform pressing and forming to obtain a green body, where a forming pressure is 15 bar. The second inorganic material is clay, and the pore-forming agent is polymethyl methacrylate (PMMA). The average particle size of the pore-forming agent is 50 µm.

Step 2) and step 3) are the same as those in Embodiment 1.

### Test example

Testing for an opening rate, a coefficient of thermal expansion, a porosity, and a pore size is performed on the porous glass-ceramic substrate of an atomization core according to this embodiment of this application. For a test method of the opening rate, reference is made to GB/T10799-2008. The test of a coefficient of thermal expansion is performed by a tester of a coefficient of thermal expansion, and a test method of the porosity and the pore size is a mercury intrusion method (a test device is a mercury porosimeter).

Results of an average pore size, a porosity, and an opening rate of Embodiment 1 to Embodiment 3 are shown in Table 1.

**Table 1 Test results of a porous glass-ceramic substrate of an embodiment**

| Embodiment | Average pore size (µm) | Porosity (%) | Opening rate (%) |
|---|---|---|---|
| Embodiment 1 | 18.4 | 62.01 | 98 |
| Embodiment 2 | 21.77 | 77.06 | 96 |
| Embodiment 3 | 20.44 | 76.35 | 87 |

Testing of the coefficient of thermal expansion of Embodiment 1 and Embodiment 2 is shown in Table 2.

**Table 2 Test results of a coefficient of thermal expansion of a porous glass-ceramic substrate of an embodiment**

| Embodiment | Coefficients (×10⁻⁶/°C) of thermal expansion at various temperatures | | | | | | | |
|---|---|---|---|---|---|---|---|---|
| | 100°C | 200°C | 300°C | 400°C | 500°C | 600°C | 700°C | Maximum value |
| Embodiment 1 | 13.405 | 20.639 | 18.107 | 16.641 | 15.640 | 15.121 | / | 20.699 (193.3°C) |
| Embodiment 2 | 13.081 | 17.808 | 15.923 | 14.957 | 14.322 | 14.931 | 12.540 | 18.387 (127.8°C) |

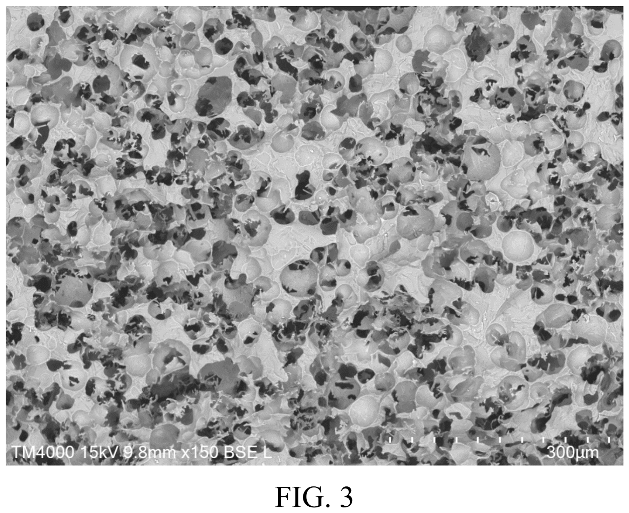

As shown in FIG. 2 and FIG. 3, FIG. 2 is a scanning electron micrography (SEM) diagram of a surface of Embodiment 1. FIG. 3 is an SEM diagram of a cross-section of an interior thereof. It may be learned that the interior of the porous glass-ceramic substrate has a rich and communicated pore structure, and extends to the surface of the porous glass-ceramic substrate, and the surface thereof also has a rich pore structure.

The atomization core in Embodiment 1 is used to respectively test for a vapor amount, soot, a lifespan, and a temperature field of the atomization core. In addition, an inhalation experiment is performed through the atomization core in Embodiment 1, to test an inhalation taste. A method for testing the vapor amount involves each inhalation process (that is, each puff) includes: inhaling for 3S and then pausing for 8S, testing the vapor amount in each inhalation process, and performing statistics collection to obtain an average value. A distribution of the temperature field is obtained by using an infrared thermometer for the temperature field of the atomization core, and then statistics collection is performed on the distribution of the temperature field. After a preset quantity of puffs is inhaled (the preset quantity of puffs in this application is 500), the soot on the surface of the atomization core is observed, to determine a deposit condition of the soot. During a process of inhaling the preset quantity of puffs, whether a failure situation exists is tested, and statistics collection is performed to record a lifespan situation thereof. The failure situation mainly includes: 1. A significant abnormal change of a resistance of the atomization core (for example, a significant increase in the resistance caused by splitting or shedding of the heating element). 2. A fog output volume is less than half of an initial atomization amount. The foregoing test condition are 6.5 W power and a die (not assembled as an atomizer). In a taste test, the atomization core is assembled as the atomizer.

The inhalation taste is determining, by a tester, whether any abnormal taste such as a burnt flavor exists during a preset quantity of inhalation puffs.

The foregoing tests of the soot, the vapor amount, the lifespan, and the atomization core are respectively performed by using 2 different flavored e-liquids: fruit (watermelon) flavored e-liquid (e-liquid a) and tobacco flavored e-liquid (e-liquid b). As shown in Table 3, the temperature field, the vapor amount, the soot, the taste, and the lifespan (whether an inhalation for 500 puffs fails) of the atomization core in this embodiment of this application tested through the e-liquid a, and the vapor amount tested through the e-liquid b.

**Table 3 Test results of an embodiment of an atomization core**

| Embodiment | Temperature field (°C) | Vapor amount TPM (mg) E-liquid a | Vapor amount TPM (mg) E-liquid b | Soot | Taste | Lifespan (500 puffs) |
|---|---|---|---|---|---|---|
| Embodiment 1 | 220-310 | 9.23 | 9.11 | Less soot | No burnt flavor | No failure |
| Embodiment 2 | 250-297 | 11.79 | 9.46 | Less soot | No burnt flavor | No failure |
| Embodiment 3 | 210-290 | 11.44 | 7.00 | Less soot | No burnt flavor | No failure |

As shown in Table 3, within a preset quantity of 500 puffs, an atomization amount of the atomization core in this application is large, meeting the lifespan requirements of the preset 500 puffs, which has a good taste and no burnt taste.

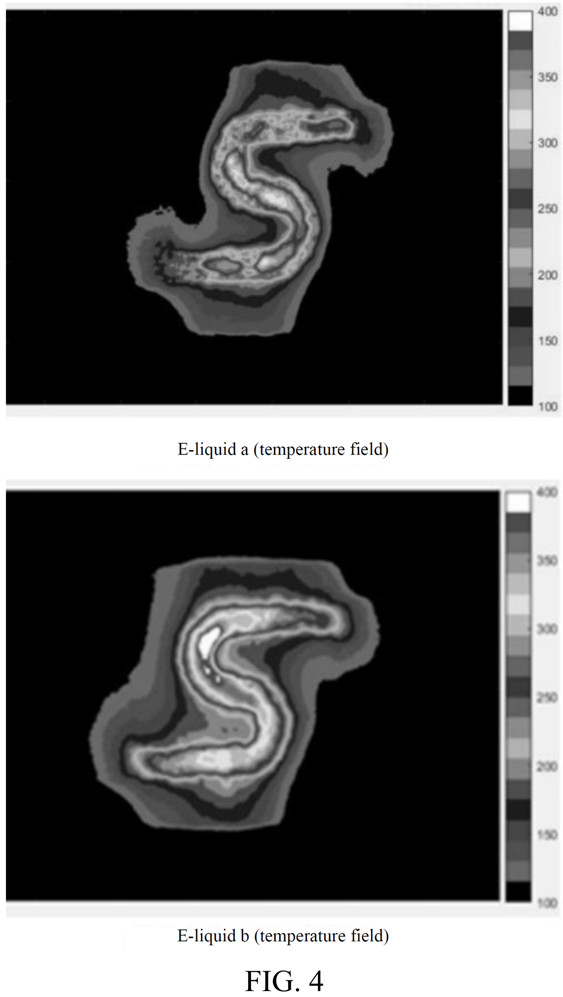

FIG. 4 to FIG. 6 are respectively a temperature field distribution diagram, a statistical chart of a temperature zone area, and a schematic diagram of a soot situation according to Embodiment 1. It should be noted that the liquid atomization substrate (the e-liquid) usually includes 1 to 50 parts of propylene glycol (PG), 30 to 50 parts of vegetable glycerin (VG), 0 to 20 parts of a food flavor, 0 to 5 parts of nicotine/nicotine salt, and the like. The propylene glycol (PG) has a boiling point of approximately 188.2°C, and the vegetable glycerin (VG) has a boiling point of approximately 290°C. Therefore, an effective atomization temperature range of the liquid atomization substrate usually should be at least greater than 190°C. An ideal optimal atomization temperature range may also vary slightly based on different addition proportions and types of the vegetable glycerin (VG) and the food flavor. In this application, it may be learned from FIG. 5 that, for the e-liquid a, a temperature of a main atomization region in an atomization process of the atomization core ranges from 220°C to 310°C, a temperature of a local high temperature ranges from 310°C to 340°C, and a temperature range concentrates in an efficient atomization range, which helps improves the atomization efficiency and is not easy to scale. For the e-liquid b, a temperature of a main atomization region ranges from 220°C to 370°C, a local high temperature ranges from 370°C to 400°C, and areas of several temperature ranges such as 220-250°C, 250-280°C, 280-310°C, and 310-340°C are substantially the same. It can be seen that the e-liquid has a specific temperature gradient. Such a temperature distribution having a gradient can better arouse richness of layered e-liquid, making the taste layered and improving user experience.

FIG. 6 shows a soot distribution situation on an atomization surface of an atomization core after an inhalation test of 500 puffs is performed on the atomization core in Embodiment 1. When the e-liquid a is inhaled by 500 puffs, the surface of the atomization surface has little soot. The reason is that the atomization medium has a relatively low efficient atomization temperature range, is not easy to scale, and has high atomization efficiency. When the e-liquid b is inhaled by 500 puffs, the surface of the atomization surface has a small amount of scale. The reason is that the atomization medium has a relatively high efficient atomization temperature range, and a distribution of the temperature zone has a specific gradient, which can improve the taste. The two types of e-liquid still do not fail after the inhalation test of 500 puffs is performed, and has good lifespan and reliability.

The inventor considers through analysis that the temperature field of the atomization core provided in this application concentrates in a high efficiency zone and has a specific temperature field gradient. Therefore, the atomization core has high atomization efficiency, is not easy to scale, does not cause dry heating, and has rich taste layers and no burnt taste. In addition, an internal pore channel thereof is developed, which can quickly supply e-liquid to the atomization surface to avoid a local high temperature and dry heating of a product due to insufficient liquid supply. In addition, because the glass is manufactured by sintering of the glass bubble, and is controlled through a process, the glass is converted into a glass-ceramic (that is, the crystalline), so that the porous glass-ceramic substrate has a stable volume, and the coefficient of thermal expansion is within a suitable range. The heating element is prevented from breaking and failing due to an excessively high volume change during use, thereby improving the service life of the atomization core. Specifically, the porous glass-ceramic substrate has a high opening rate of a pore structure, few closed pores, and a desirable e-liquid guiding effect. It is further considered through analysis that the reason for the high opening rate is that the glass bubble monomer has a stable opening. Moreover, because the glass bubble monomer has a relatively high degree of crystallinity, and the particle that has already crystallized has a higher melting point and does not soften, the particle can be used as a framework to keep the shape of the entire substrate unchanged. Therefore, collapsing during a process of sintering is avoided, it is ensured that the pores are not damaged, and the particle keeps a relatively good framework state, thereby achieving a better e-liquid guiding effect, better appearance stability, and improving the atomization efficiency and the service life.

Obviously, the above embodiments are merely examples for clear description and not limitations on the implementations. For a person of ordinary skill in the art, other changes or alterations in different forms may also be made based on the foregoing description. All implementations are not required and cannot be exhaustive herein. However, the obvious changes or variations derived therefrom still fall within the protection scope of this application.

## Claims

1. An atomization core, comprising a porous substrate and a heating element, wherein
the porous substrate is a porous glass-ceramic substrate, and the porous glass-ceramic substrate comprises a plurality of glass-ceramic bubbles;
adjacent glass-ceramic bubbles are directly bonded to each other through sintering;
at least some of the glass-ceramic bubbles have openings; and
cavities in the glass-ceramic bubbles having the openings are in communication with each other through the openings to form pores, and the pores extend through the porous glass-ceramic substrate and reach a surface of the porous glass-ceramic substrate.

2. The atomization core of claim 1, wherein a coefficient of thermal expansion of the porous glass-ceramic substrate ranges from 10×10⁻⁶/°C to 21x10⁻⁶/°C; and
optionally, the coefficient of thermal expansion of the porous glass-ceramic substrate ranges from 12.54×10⁻⁶/°C to 20.64×10⁻⁶/°C.

3. The atomization core of claim 1 or 2, wherein crystallinity of the glass-ceramic bubbles ranges from 45% to 95%.

4. The atomization core of any one of claims 1 to 3, wherein an opening rate of the glass-ceramic bubbles in the porous glass-ceramic substrate is greater than 80%; and
optionally, the opening rate of the glass-ceramic bubbles in the porous glass-ceramic substrate ranges from 87% to 98%.

5. The atomization core of any one of claims 1 to 4, wherein a porosity of the porous glass-ceramic substrate ranges from 50% to 90%;
optionally, the porosity of the porous glass-ceramic substrate ranges from 60% to 80%; and
optionally, the porosity of the porous glass-ceramic substrate ranges from 62.01% to 76.35%.

6. The atomization core of any one of claims 1 to 5, wherein the porous glass-ceramic substrate further comprises pores formed by a pore-forming agent.

7. The atomization core of claim 6, wherein in the porous glass-ceramic substrate, a pore volume formed by the glass-ceramic bubbles having openings accounts for more than 70% of a total pore volume of the porous glass-ceramic substrate.

8. The atomization core of any one of claims 1 to 7, wherein an average pore size in the porous glass-ceramic substrate ranges from 10 µm to 60 µm.

9. The atomization core of any one of claims 1 to 8, wherein the heating element is selected from at least one of a metal heating wire, a metal heating mesh, or a metal heating film; and
the heating element is arranged on at least one surface of the porous glass-ceramic substrate; and
optionally, the metal heating film is selected from at least one of stainless steel or a nickel-containing alloy.

10. An atomizer (1), comprising the atomization core according to any one of claims 1 to 9.

11. An electronic atomization device, comprising the atomizer (1) of claim 10, and further comprising a battery assembly (2).
